# FASCICULE DE BREVET EUROPEEN

(11) **EP 0 666 405 B1**
(45) Date de publication et mention de la délivrance du brevet: **06.08.1997**
(21) Numéro de dépôt: 95400157.4
(22) Date de dépôt: 25.01.1995
(51) Int. Cl.: E06B 9/56, B60J 1/20

(54) **Mécanisme d'enroulement d'une toile**
Aufwickeleinrichtung für eine Rollblende
Winding mechanism for a roller screen

(30) Priorité: 04.02.1994 FR 9401278
(43) Date de publication de la demande: 09.08.1995
(73) Titulaire: FARNIER & PENIN SNC, F-79300 Bressuire (FR)
(72) Inventeur: Jincheleau, Michel, F-79320 Moncoutant (FR); Barrou, Joel, F-79300 Bressuire (FR)
(74) Mandataire: Robert, Jean-Pierre

(56) Documents cités:
- FR-A- 805 672
- FR-A- 830 401
- FR-A- 2 430 511
- FR-A- 2 542 364
- US-A- 1 920 099
- US-A- 2 464 903
- US-A- 4 731 905
- US-A- 5 024 479

## Description

La présente invention concerne un mécanisme d'enroulement d'une toile, notamment d'un store à rappel élastique.

Les stores, notamment pour véhicules automobiles, comprennent en général un boîtier dans lequel est monté tournant un tube d'enroulement de la toile du store, ce tube étant sollicité par un couple de rappel qui tend à enrouler la toile autour du tube jusqu'à faire porter l'extrémité libre de cette toile équipée d'une barre de tirage contre les bords d'une fente dont est pourvu le boîtier et au travers de laquelle la toile peut être déployée. Le couple d'enroulement est engendré par un ressort à boudin ou à spires hélicoïdales s'étendant à l'intérieur du tube et attelé par une de ses extrémités au tube et par son autre extrémité à un élément de structure fixe solidaire du boîtier. Plus précisément, dans pratiquement tous les stores connus, chacune des extrémités du ressort est solidaire d'un embout, les deux embouts étant traversés par une tige. Le ressort mis en place est un ressort à spires jointives dont la longueur est en général inférieure à la longueur du tube, si bien qu'au repos il se comporte comme une portion de tube relativement indéformable en flexion. Cette caractéristique est recherchée parce qu'elle rend plus pratiques et plus commodes les opérations automatiques d'assemblage d'un enrouleur de store.

Afin d'être certain que l'enroulement de la toile soit complet, on bande le ressort afin qu'il engendre un couple résiduel sur le tube, la toile étant complètement enroulée. Bander le ressort consiste dans ce cas, à partir de son état de repos, à engendrer une torsion de l'une de ses extrémités par rapport à l'autre dans le sens où elle crée une diminution du diamètre des spires. Cet armement a pour effet d'augmenter la longueur du ressort si bien qu'on ne peut fixer l'extrémité de la tige à la structure fixe qu'après avoir procédé à cette torsion d'armement.

On s'est rendu compte que dans cet état précontraint, le ressort tendait à prendre une forme en vrille ou hélice, si bien qu'il ne restait plus coaxial à la tige et que certaines de ses spires pouvaient venir toucher cette tige. Cet effet est encore augmenté lorsque l'on déploie la toile car la contrainte supplémentaire en torsion qu'imprime le déploiement de la toile sur le ressort tend à accentuer cette forme en hélice puisque le ressort étant axialement bridé du fait de la fixation de la tige par rapport au boîtier, il ne possède plus la liberté de s'allonger. On multiplie ainsi les points de contact entre la tige et le ressort, voire ceux entre le tube et le ressort, puisque celui-ci possède des parties complètement désaxées, ces points de contact étant générateurs de bruit sous l'effet des vibrations engendrées par le véhicule.

Pour résoudre le problème du logement des spires supplémentaires formées lors du bandage du ressort, il a été proposé de prévoir une précontrainte axiale du ressort grâce à sa tige interne qui écarte les spires les unes des autres. Cette solution connue pour des volets roulants de bâtiment (voir FR-A-2.430.511 et FR-A-2.542.364) ne convient pas pour des stores car un tel ressort n'a pas de longueur de fil suffisante pour qu'en fin de déploiement de la toile les contraintes imposées au fil soient limitées à des valeurs acceptables. Une autre solution consiste à prévoir un ressort à spires non jointives qui est monté sous compression axiale avant son bandage par rotation (voir US-A-4,731,905). Un tel ressort est beaucoup trop flexible au repos pour se prêter à une manutention automatique dans le processus de montage du store.

La présente invention entend remédier à cet inconvénient en proposant un ressort tel que lorsqu'il est contraint en torsion d'une part pour obtenir le couple résiduel de rappel et d'autre part lorsque l'on déploie la toile, il ne se déforme pas et reste dans une forme tubulaire rectiligne, tout en étant au repos suffisamment rigide pour rester rectiligne.

A cet effet, l'invention a donc pour objet un mécanisme d'enroulement d'une toile, notamment d'un store à rappel élastique, comportant un tube auquel est fixée une extrémité de la toile, monté tournant par rapport à une structure fixe de support et comportant un ressort de rappel formé d'une pluralité de spires hélicoïdales s'étendant à l'intérieur du tube, l'une des extrémités du ressort étant solidaire en rotation du tube tandis que son autre extrémité est attelée à la structure fixe.

Selon l'invention, le ressort étant à l'état de repos, au moins une partie de sa longueur est à spires non jointives et les autres parties sont à spires jointives.

Cette disposition permet de bander le ressort lors du montage du tube enrouleur pour obtenir la précontrainte initiale sans que ce ressort se vrille comme mentionné ci-dessus. On constate en effet que, dans ce cas, l'allongement du ressort ou de la partie à spires jointives de celui-ci dû à cette précontrainte de torsion rapproche les spires non jointives les unes des autres. Il reste encore suffisamment d'espace entre ces spires pour absorber l'allongement du ressort créé par le déploiement de la toile lorsque le store est en service, si bien que le ressort n'étant pas bridé, il ne se vrille pas comme cela était constaté auparavant.

Dans un mode préféré de réalisation, la partie du ressort à spires jointives est de longueur sensiblement égale au double de celle à spires non jointives, ce qui permet de conserver au ressort une rigidité transversale suffisante et de disposer d'une longueur de fil également suffisante.

Il est en outre avantageux de prévoir que la partie à spires non jointives est réalisée en plusieurs portions en alternance avec des portions à spires jointives, ce qui confère un meilleur équilibre des contraintes dans le ressort.

Avantageusement encore, les deux extrémités du ressort sont à spires jointives, ce qui permet un très bon accrochage des extrémités du ressort.

Enfin, on s'est rendu compte qu'avec ce mode de réalisation, il était tout à fait possible de supprimer la tige centrale qu'il était communément admis de mettre en place dans les dispositifs connus. A cet effet, il est prévu que l'une des extrémités du ressort est solidaire en rotation d'un bouchon disposé à l'intérieur du tube à distance d'une extrémité dudit tube qui est montée tournante sur la structure fixe, ledit bouchon étant arrêté en rotation et en translation par rapport audit tube, et l'autre extrémité du ressort est solidaire en rotation d'un bouchon lui-même solidaire en rotation de la structure fixe et servant de palier de support pour l'autre extrémité du tube, de sorte que le mécanisme est exempt de tige. En variante, le bouchon qui est solidaire du tube ferme l'extrémité dudit tube, et ce bouchon est alors monté tournant sur la structure fixe (tout en restant arrêté en rotation et en translation par rapport audit tube). Ceci conduit à une diminution des pièces constitutives du mécanisme d'enroulement, donc à une économie.

En variante, le ressort est disposé autour d'une tige solidaire en rotation de la structure fixe par l'une de ses extrémités, l'autre extrémité de cette tige étant attelée en rotation à une extrémité du ressort. La tige constitue alors un raidisseur pour le ressort.

D'autres caractéristiques et avantages ressortiront de la description des modes de réalisation donnée ci-après à titre d'exemple non limitatif.

Il sera fait référence aux dessins annexés parmi lesquels :
- la figure 1 est une vue en coupe du mode de réalisation préféré de l'invention ;
- la figure 2 illustre une variante du mode de réalisation précédent avec un bouchon de tube (celui qui est solidaire du tube) agencé en extrémité du tube ;
- la figure 3 est une vue en coupe d'un mode de réalisation conservant une tige centrale au mécanisme.

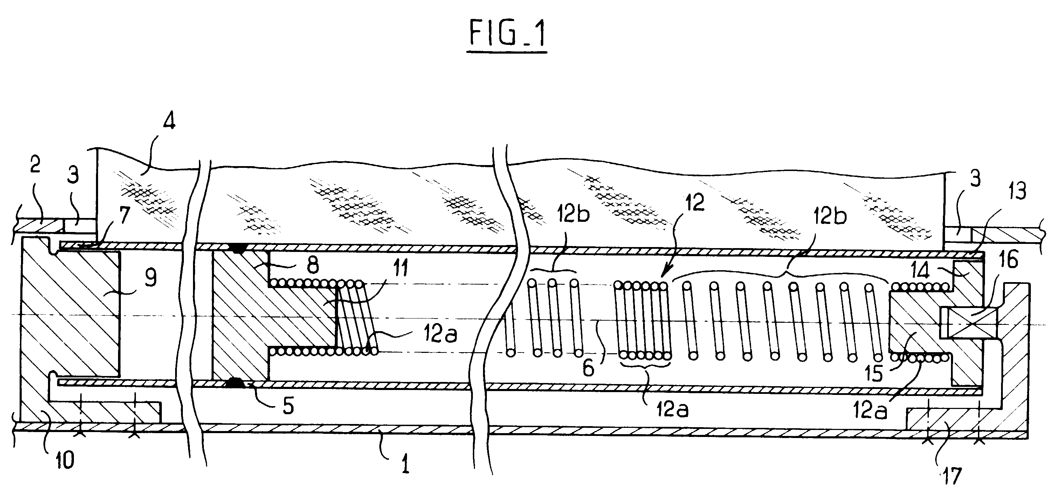

A la figure 1, la référence 1 représente le socle d'un boîtier 2, par exemple opposé à une fente 3, au travers de laquelle une toile 4 de store peut être déployée. Le boîtier 2 renferme un mécanisme d'enroulement qui comporte un tube 5 sur lequel une extrémité de la toile 4 est fixée, ce tube 5 étant monté tournant autour de son axe longitudinal 6 à l'intérieur du boîtier 1.

Plus précisément, l'extrémité 7 du tube 5 est pourvue d'un bouchon 8 engagé à force, en matière plastique, qui est monté à distance de l'extrémité du tube, en étant arrêté en rotation et en translation par rapport audit tube (par exemple par déformation extérieure du tube). L'extrémité 7 du tube 5 est montée tournante sur un palier 9 porté par un support 10 fixé à la semelle 1 du boîtier 2.

Le bouchon 8 présente, tourné vers l'intérieur, un embout 11 autour duquel est monté à force ou solidarisé de toute autre manière, un ressort 12. Le ressort 12 ne peut pas tourner par rapport à l'embout 11. A l'autre extrémité 13 du tube 5, un bouchon 14 constitue un palier de support pour l'extrémité 13 de ce tube par rapport auquel le tube peut tourner. Ce bouchon 14 comporte un embout 15 auquel est liée en rotation l'autre extrémité du ressort 12. Le bouchon 14 est porté par un doigt 16 par exemple de section carrée, par rapport auquel donc le bouchon 14 est arrêté en rotation, ce doigt 16 étant porté par un support 17 également fixé à la semelle 1 du boîtier 2.

On notera sur cette figure que le ressort 12 possède une partie 12a à spires hélicoïdales jointives, et une partie 12b de sa longueur à spires hélicoïdales non jointives. De manière préférée, la partie 12a est deux fois plus longue que la partie 12b lorsque le ressort est au repos. Ce rapport augmente ainsi au fur et à mesure de l'augmentation de la contrainte du ressort.

En l'espèce, on a prévu que les deux extrémités du ressort 12 sont à spires jointives, ce qui permet d'avoir un très bon accrochage sur les embouts 11 et 15. Par ailleurs, on a également prévu de réaliser la partie 12b qui est à spires non jointives en plusieurs portions en alternance avec des portions à spires jointives. On pourra par exemple choisir, entre les deux extrémités à spires jointives, une alternance de sept à huit portions successivement à spires non jointives et à spires jointives.

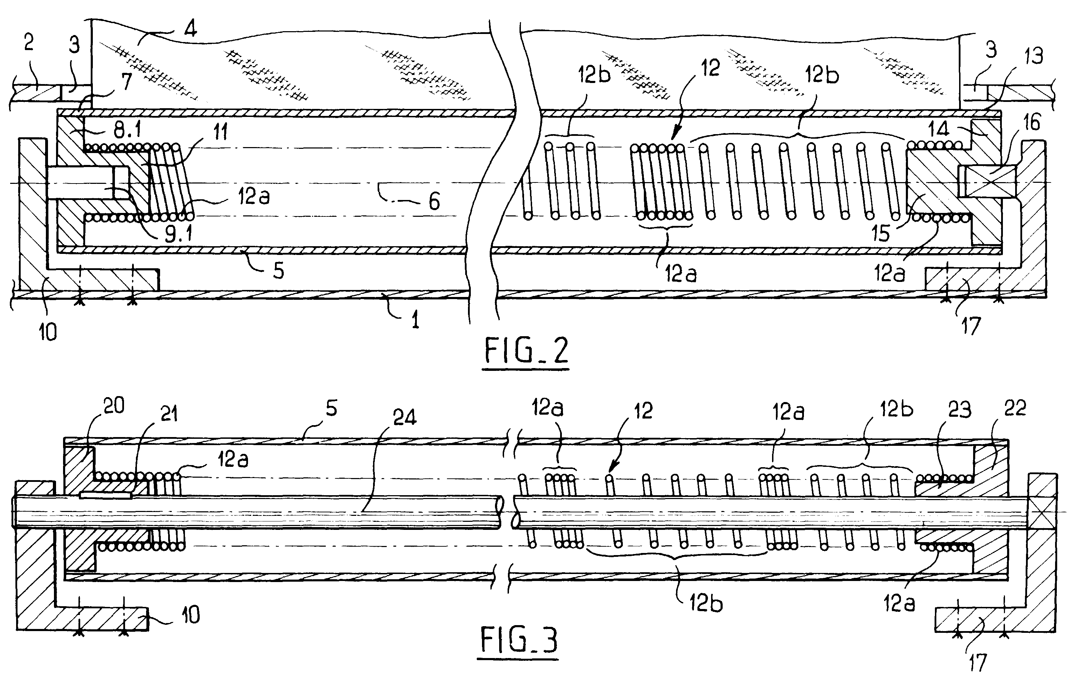

La variante de la figure 2 diffère du mécanisme précédemment décrit par la disposition et la structure du bouchon qui est solidaire du tube 5. En effet, ce bouchon, noté 8.1, ferme l'extrémité du tube 5, tout en restant naturellement arrêté en rotation et en translation par rapport audit tube. Dans ce cas, la structure fixe 10 présente un doigt cylindrique 9.1 sur lequel le bouchon 8.1 est monté tournant. Le reste du mécanisme est identique au mécanisme de la figure 1, et ne sera donc pas décrit.

Les mécanismes des figures 1 et 2 sont donc exempts de tige centrale, ce qui simplifie la structure et diminue le coût de fabrication.

Le montage du mécanisme d'enroulement consiste à équiper le tube 5 de la toile 4 enroulée, à introduire le ressort 12 à l'intérieur du tube, ce dernier étant équipé des bouchons 8 (ou 8.1) et 14, à solidariser le bouchon 8 (ou 8.1) au tube 5 à l'emplacement désiré, à armer le ressort en utilisant le doigt carré 16 pour lui imprimer une rotation de 8 à 18 tours, à introduire ainsi bandé, le mécanisme dans le boîtier 2 en faisant sortir la toile 4 de la fente 3 et en bloquant cette extrémité extérieure par rapport au boîtier, et enfin à fixer les supports 10 et 17 à la semelle 1 du boîtier.

La précontrainte imprimée au ressort tend à augmenter sa dimension longitudinale au détriment de son diamètre qui diminue un peu, cette variation longitudinale étant absorbée par les intervalles à spires non jointives. Le déploiement de la toile qui en général conduit à une rotation supplémentaire de 8 à 12 tours pour le tube, produit la même tendance à l'allongement du ressort, qui est également absorbée par les intervalles encore disponibles entre les spires non jointives. Le ressort aura été calculé, formé et choisi pour que lors du déploiement total de la toile, les spires non jointives soient parvenues au contact les unes des autres.

A l'inverse, lors de l'enroulement de la toile, le ressort tend à diminuer de longueur, cette diminution étant compensée par l'écartement progressif des spires qui sont non jointives lorsqu'il est dans son état de repos. Il ne se produit donc aucun vrillage du ressort qui reste sensiblement rectiligne quel que soit son état de contrainte, ne possédant ainsi aucune zone déformée pouvant être proche ou au contact de la surface intérieure du tube 5. De ce fait, les vibrations du véhicule ne provoqueront pas de choc entre le tube et le ressort, donc aucun bruit.

A la figure 3, on retrouve certains des éléments déjà décrits avec les mêmes références. Le ressort 12 est emmanché sur les embouts 21 et 23 de deux bouchons 20 et 22, avec, dans ce cas, le bouchon 22 solidaire en rotation du tube 5 et le bouchon 20 formant palier pour l'autre extrémité de ce tube. Les bouchons sont traversés par une tige 24, avec un montage tel que le bouchon 20 soit solidaire en rotation de celle-ci alors que le bouchon 22 peut tourner librement. La tige 24 étant portée par des supports 10 et 17 est fixe en rotation par rapport à ces derniers ou par rapport à au moins l'un d'eux 17. L'armement initial du ressort est comme dans le cas précédent obtenu en faisant tourner le support 17, avant sa fixation au boîtier, donc la tige 24 dans le tube, de telle sorte que le bouchon 20 soit entraîné en rotation et imprime 10 à 12 tours de rotation au ressort 12. De même, le déploiement de la toile entraînera la rotation du tube et l'augmentation de la contrainte de torsion imprimée au ressort 12 par l'intermédiaire du bouchon 22. Cette disposition peut présenter l'avantage d'offrir au ressort 12 un raidisseur constitué par la tige 24 qui est située en son centre, ce ressort pouvant alors être au repos plus flexible transversalement que le ressort décrit en regard des figures 1 et 2, sachant que sa raideur augmentera progressivement en fonction de la contrainte en torsion qu'il subira. Ses caractéristiques seront telles que lorsqu'il est précontraint, sa raideur transversale est augmentée sans déformation du type en vrille. On peut également, par ce montage, obtenir un mécanisme d'enroulement silencieux à l'égard des vibrations du véhicule.

## Revendications

1. Mécanisme d'enroulement d'une toile (4), notamment d'un store à rappel élastique comprenant un tube (5) auquel est fixée une extrémité de la toile (4), monté tournant par rapport à une structure fixe (1, 2, 10, 17) de support et comportant un ressort (12) de rappel formé d'une pluralité de spires hélicoïdales s'étendant à l'intérieur du tube (5), l'une des extrémités du ressort étant solidaire en rotation du tube (5), son autre extrémité étant attelée à la structure fixe, caractérisé en ce qu'à l'état de repos, le ressort (12) possède au moins une partie (12a) à spires jointives et au moins une partie (12b) à spires non jointives.

2. Mécanisme selon la revendication 1, caractérisé en ce que la partie (12a) du ressort à spires jointives est de longueur sensiblement égale au double de celle (12b) à spires non jointives lorsque le ressort est au repos.

3. Mécanisme selon la revendication 1 ou la revendication 2, caractérisé en ce que la partie (12b) a spires non jointives est réalisée en plusieurs portions en alternance avec des portions à spires jointives.

4. Mécanisme selon l'une des revendications 1 à 3, caractérisé en ce que les deux extrémités du ressort (12) sont à spires jointives.

5. Mécanisme selon l'une des revendications 1 à 4, caractérisé en ce que l'une des extrémités du ressort (12) est solidaire en rotation d'un bouchon (8) disposé à l'intérieur du tube (5) à distance d'une extrémité dudit tube qui est montée tournante sur la structure fixe, ledit bouchon étant arrêté en rotation et en translation par rapport audit tube, et l'autre extrémité du ressort est solidaire en rotation d'un bouchon (14) lui-même solidaire en rotation de la structure fixe et servant de palier de support pour l'autre extrémité du tube, de sorte que le mécanisme est exempt de tige.

6. Mécanisme selon l'une des revendications 1 à 4, caractérisé en ce que l'une des extrémités du ressort (12) est solidaire en rotation d'un bouchon (8.1) fermant l'extrémité du tube (5), ledit bouchon étant arrêté en rotation et en translation par rapport audit tube et étant monté tournant sur la structure fixe, et l'autre extrémité du ressort est solidaire d'un bouchon (14) lui-même solidaire en rotation de la structure fixe et servant de palier de support pour l'autre extrémité du tube, de sorte que le mécanisme est exempt de tige.

7. Mécanisme selon l'une des revendication 1 à 4, caractérisé en ce que le ressort (12) est disposé autour d'une tige (24) solidaire en rotation de la structure fixe (10, 17) par l'une de ses extrémités, l'autre extrémité de cette tige étant attelée en rotation à une extrémité du ressort (12).

## Patentansprüche

1. Aufwickeleinrichtung für eine Rollblende (4), insbesondere ein Schnapprollo, mit einem Rohr (5), an dem ein Ende der Rollblende (4) befestigt ist und das bezüglich einer ortsfesten Halterungsstruktur (1, 2, 10, 17) drehbar montiert ist und eine Rückstellfeder (12) hat, die aus einer Vielzahl schraubenförmiger Windungen gebildet ist, die sich im Inneren des Rohrs (5) erstrecken, wobei ein Ende der Feder drehfest mit dem Rohr (5) verbunden und ihr anderes Ende an der ortsfesten Struktur befestigt ist, dadurch **gekennzeichnet,** daß die Feder (12) im Ruhezustand mindestens einen Teil (12a) mit aneinanderliegenden Windungen und mindestens einen Teil (12b) mit nicht aneinanderliegenden Windungen hat.

2. Einrichtung nach Anspruch 1, dadurch **gekennzeichnet,** daß im Ruhezustand der Feder der Federteil (12a) mit aneinanderliegenden Windungen im wesentlichen doppelt so lang ist wie der Teil (12b) mit nicht aneinanderliegenden Windungen.

3. Einrichtung nach Anspruch 1 oder Anspruch 2, dadurch **gekennzeichnet,** daß der Teil (12b) mit nicht aneinanderliegenden Windungen aus mehreren Abschnitten gebildet ist, die sich mit Abschnitten mit aneinanderliegenden Windungen abwechseln.

4. Einrichtung nach einem der Ansprüche 1 bis 3, dadurch **gekennzeichnet,** daß die beiden Enden der Feder (12) aneinanderliegende Windungen haben.

5. Einrichtung nach einem der Ansprüche 1 bis 4, dadurch **gekennzeichnet,** daß ein Ende der Feder (12) drehfest mit einem Stopfen (8) verbunden ist, der im Inneren des Rohres (5) beabstandet von einem Ende desselben angeordnet ist, das drehbar an der ortsfesten Struktur montiert ist, wobei der Stopfen relativ zum Rohr nicht drehbar und nicht verschiebbar ist, und daß das andere Ende der Feder drehfest mit einem Stopfen (14) verbunden ist, der seinerseits drehfest mit der ortsfesten Struktur verbunden ist und als Lager für das andere Ende des Rohres dient, so daß die Einrichtung keine Stange hat.

6. Einrichtung nach einem der Ansprüche 1 bis 4, dadurch **gekennzeichnet,** daß ein Ende der Feder (12) drehfest mit einem Stopfen (8.1) verbunden ist, der das Ende des Rohres (5) verschließt, wobei der Stopfen relativ zum Rohr nicht drehbar und nicht verschiebbar ist und drehbar an der ortsfesten Struktur montiert ist, und daß das andere Ende der Feder mit einem Stopfen (14) verbunden ist, der seinerseits drehfest mit der ortsfesten Struktur verbunden ist und als Lager für das andere Ende des Rohres dient, so daß die Einrichtung keine Stange hat.

7. Einrichtung nach einem der Ansprüche 1 bis 4, dadurch **gekennzeichnet,** daß die Feder (12) um eine Stange (24) herum angeordnet ist, deren eines Ende drehfest mit der ortsfesten Struktur (10, 17) verbunden ist, während das andere Ende der Stange drehfest mit einem Ende der Feder (12) verbunden ist.

## Claims

1. A winding mechanism for a cloth (4), in particular a blind with resilient return, comprising a tube (5) to which an end of the cloth (4) is fixed and which is mounted rotatably with respect to a fixed support structure (1, 2, 10, 17) and comprising a return spring (12) formed by a plurality of helicoidal turns extending in the interior of the tube (5), one of the ends of the spring being non-rotatably fixed with respect to the tube (5) and its other end being secured to the fixed structure, characterised in that in the rest condition the spring (12) has at least one part (12a) with contiguous turns and at least one part (12b) with non-contiguous turns.

2. A mechanism according to claim 1 characterised in that the part (12a) of the spring with contiguous turns is of a length substantially equal to double that (12b) with non-contiguous turns when the spring is in the rest condition.

3. A mechanism according to claim 1 or claim 2 characterised in that the part (12b) with non-contiguous turns is made up of a plurality of portions alternating with portions with contiguous turns.

4. A mechanism according to one of claims 1 to 3 characterised in that the two ends of the spring (12) have contiguous turns.

5. A mechanism according to one of claims 1 to 4 characterised in that one of the ends of the spring (12) is non-rotatably fixed with respect to a plug (8) disposed in the interior of the tube (5) at a spacing from an end of said tube, which end is mounted rotatably on the fixed structure, said plug being arrested in respect of rotary and translatory movement with respect to said tube, and the other end of the spring is non-rotatably fixed with respect to a plug (14) which is itself non-rotatably fixed with respect to the fixed structure and which serves as a support bearing for the other end of the tube such that the mechanism is free from a bar.

6. A mechanism according to one of claims 1 to 4 characterised in that one of the ends of the spring (12) is non-rotatably fixed with respect to a plug (8.1) closing the end of the tube (5), said plug being arrested in respect of rotary and translatory movement with respect to said tube and being mounted rotatably on the fixed structure, and the other end of the spring is fixed with respect to a plug (14) which is itself non-rotatably fixed with respect to the fixed structure and serves as a support bearing for the other end of the tube such that the mechanism is free from a bar.

7. A mechanism according to one of claims 1 to 4 characterised in that the spring (12) is disposed around a bar (24) which is non-rotatably fixed with respect to the fixed structure (10, 17) by way of one of its ends, the other end of said bar being non-rotatably coupled to an end of the spring (12).
